# EUROPÄISCHE PATENTSCHRIFT

(11) **EP 1 109 346 B1**
(45) Veröffentlichungstag und Bekanntmachung des Hinweises auf die Patenterteilung: **07.11.2007**
(21) Anmeldenummer: 00127169.1
(22) Anmeldetag: 12.12.2000
(51) Int. Cl.: H04L 1/24, H04L 12/413, H04L 1/22

(54) **Verfahren zur Ermittlung und Behandlung von Übertragungsfehlern auf einem Bussystem**
Method for determining and handling transmission errors on bus systems
Procédé de détermination et de traitement d'erreurs de transmission dans des systèmes de bus

(30) Priorität: 17.12.1999 DE 19960975
(43) Veröffentlichungstag der Anmeldung: 20.06.2001
(73) Patentinhaber: Tenovis GmbH & Co. KG, 60362 Frankfurt (DE)
(72) Erfinder: Artun, Berkan, 64293 Darmstadt (DE); Schmidt, Werner, Dipl.-Ing., 63762 Grossostheim (DE)
(74) Vertreter: Tergau & Pohl Patentanwälte

(56) Entgegenhaltungen:
- DE-A1- 4 017 494
- DE-A1- 4 304 187

## Beschreibung

### Stand der Technik

Die Erfindung geht aus von einem Verfahren zur Ermittlung und Behandlung von Übertragungsfehlern auf einem Bussystem nach der Gattung des unabhängigen Patentanspruchs.

Es ist bereits aus der Offenlegungsschrift DE 43 04 197 A1 bekannt, dass ein Verfahren zur Beschleunigung des Zugriffswettbewerbs für an ein Bussystem angeschlossene Station in Vermittlungseinrichtungen mittels Wettbewerbsnummern, die ganz oder teilweie auf mehrere Zugriffsleitungen geschaltet werden, implementiert werden kann. Eine an das Bussystem angeschlossene Station stellt fest, ob eine sich auf den Zugriffsleitungen befindliche Wettbewerbsnummer größer oder kleiner als die von ihr gesendete Wettbewerbsnummer ist. Ist sie größer, wird die entsprechende Station sofort aus dem Zugriffswettbewerb ausgeschlossen.

Aus der DE 40 17 494 A1 ist ferner ein Fehlerdetektor für eine Fernmeldeschaltung bekannt, bei der ein aufgetretener Fehler anhand eines Rücklauf - Prüfsignals verifiziert wird.

### Vorteile der Erfindung

Das erfindungsgemäße Verfahren zur Ermittlung und Behandlung von Übertragungsfehlern auf einem Bussystem mit den Merkmalen des unabhängigen Patentanspruchs hat demgegenüber den Vorteil, daß Übertragungsfehler auf dem Bussystem ermittelt werden, wobei die Ursachen für diese Übertragungsfehler eingegrenzt werden, insbesondere, ob die Übertragungsfehler auf ein fehlerhaftes Bussystem zurückzuführen sind.

Liegt vorteilhafterweise ein redundantes Bussystem vor, kann im Falle eines fehlerhaften Bussystems auf dieses redundante Bussystem umgeschaltet werden, um die Datenübertragung über ein Bussystem fortzusetzen. Damit wird eine adaptive Fehlererkennung und eine entsprechende Korrektur durchgeführt.

Liegt kein redundantes Bussystem vor, wird die Übertragung gegebenenfalls über das fehlerhafte Bussystem beendet, und ein Fehler wird angezeigt. Dies ist insbesondere von Vorteil für Servicedienstleistungen, da dann Servicetechniker sofort einen Fehler identifizieren können.

Durch die in den abhängigen Ansprüchen aufgeführten Maßnahmen sind vorteilhafte Weiterbildungen und Verbesserungen des im unabhängigen Anspruch angegebenen Verfahrens zur Ermittlung und Behandlung von Übertragungsfehlern auf einem Bussystem möglich.

Besonders vorteilhaft ist, daß, wenn mehrere an das Bussystem angeschlossene Stationen einen Test aufgrund eines erkannten Übertragungsfehlers gleichzeitig durchführen wollen, dies von den Stationen anhand des durch die Überlagerung der Testmuster entstehenden Testmusters auf dem Bussystem erkannt wird und daß dann vor dem erneuten Zugriffsversuch ein individueller Zeitversatz für die einzelnen Stationen erfolgt, wobei dann im nächsten Takt eine der Stationen allein den Zugriffswettbewerb gewinnen wird und den Test durchführt. In den nächsten Takten werden die anderen Stationen, die gleichzeitig den Test durchführen wollten, ihren Zugriffswettbewerb durchführen. Dadurch wird in vorteilhafter Weise eine Kollisionssituation entspannt, so daß in einem nächsten Takt sofort ein Übertragungstest durchgeführt werden kann, um den Zustand des Bussystems beurteilen zu können. Somit wird erreicht, daß einem Test des Bussystems die höchste Priorität zukommt. Dies ist für die Qualität der weiteren Übertragungen von höchster Wichtigkeit.

Weiterhin ist von Vorteil, daß ein Wechsel auf ein redundantes Bussystem durch Steuersignale den an das Bussystem angeschlossenen Stationen signalisiert wird.

Des weiteren ist es von Vorteil, daß das Testmuster so ausgeprägt ist, daß es erlaubt festzustellen, ob mehr als eine Station das Testmuster zu senden wünscht.

### Zeichnung

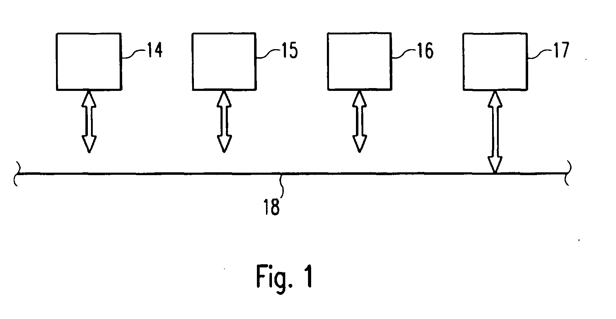

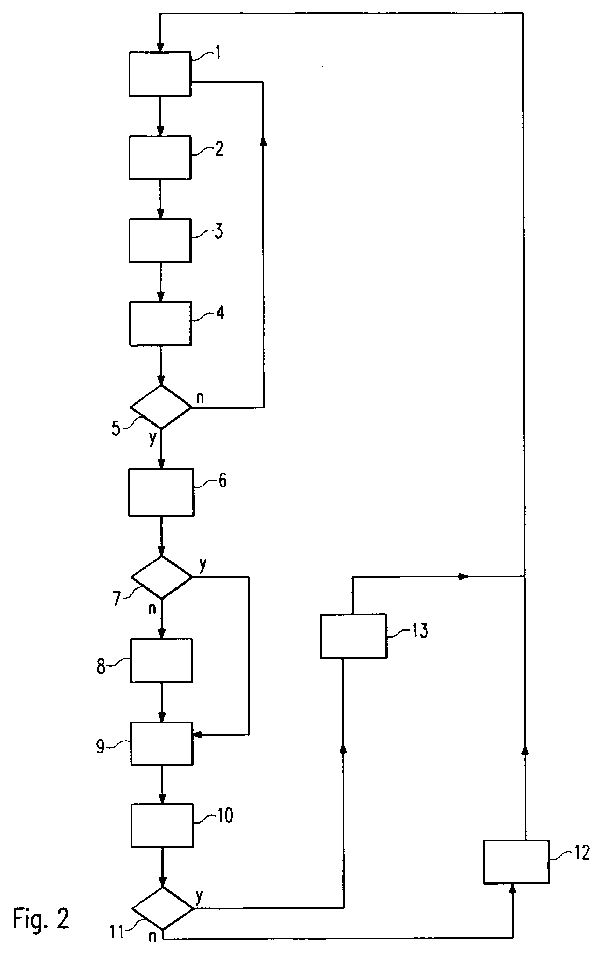

Ausführungsbeispiele der Erfindung sind in der Zeichnung dargestellt und in der nachfolgenden Beschreibung näher erläutert. Es zeigen Figur 1 ein Bussystem mit angeschlossenen Stationen und Figur 2 ein erfindungsgemäßes Verfahren zur Ermittlung und Behandlung von Übertragungsfehlern auf einem Bussystem.

### Beschreibung

Vermittlungseinrichtungen für z.B. ATM (Asynchronus Transfer Mode) weisen ein Bussystem auf, über das angeschlossene Stationen, die mit Leitungen verbunden sind, auf denen Daten zu der Vermittlungseinrichtung übertragen werden und von der Vermittlungseinrichtung versendet werden, diese Daten zwischen den Stationen übertragen. Die Daten werden also vermittelt. Da auf solch einem Bussystem zu einem Zeitpunkt nur eine Station Daten übertragen kann, wird mittels eines Zugriffswettbewerbs ermittelt, welche Station sendeberechtigt ist. Die Sendeberechtigung richtet sich nach einer Priorität der Daten, die zu übertragen sind. Es gibt verschiedene Arten von Daten, die je nach ihrer Übertragungsart verschiedene Prioritäten zugewiesen bekommen.

In Figur 1 ist ein Bussystem dargestellt, an das Stationen angeschlossen sind. Die Stationen 14, 15, 16 und 17 sind über Datenein/-ausgänge an ein Bussystem 18 angeschlossen. Die Stationen 14, 15, 16, 17 sind darüber hinaus mit Leitungen verbunden, über die Daten zu einer Vermittlungseinrichtung, die dieses Bussystem 18 beinhaltet, übertragen werden, wobei die Vermittlungseinrichtung auch über diese Leitungen Daten weiter versendet, um ihre Funktion als Vermittlungseinrichtung zu erfüllen.

Treten nun Übertragungsfehler auf dem Bussystem 18 auf, kann dies mehrere Ursachen haben. Erfindungsgemäß führen daher die Stationen 14, 15, 16 und 17 Vergleiche durch, um Übertragungsfehler zunächst zu detektieren. Insbesondere wird dann das Bussystem 18 als Ursache für die Übertragungsfehler getestet.

In Figur 2 ist das erfindungsgemäße Verfahren als Flußdiagramm dargestellt. In Verfahrensschritt 1 empfängt eine der Stationen 14, 15, 16, 17 Daten von an diese Stationen angeschlossenen Leitungen. Die Daten werden von der jeweiligen Station zwischengespeichert, und die Daten werden daraufhin untersucht, wohin diese Daten weitervermittelt werden. Dazu weisen die Daten, die in Datenpaketen übertragen werden, Adressen auf. Diese Adressen geben den angeschlossenen Stationen die Information, ob die Daten weiter zu empfangen sind, so daß sie auf eine andere Leitung weitervermittelt werden können.

In Verfahrensschritt 2 versendet die Station, die die Daten zwischengespeichert hat, diese Daten zu der anderen an das Bussystem 18 angeschlossenen Station. In dem Beispiel ist die sendende Station die Station 14 und die empfangende Station die Station 17.

Um aber eine Übertragung über das Bussystem 18 durchführen zu können, ist es erforderlich, daß die Station 14 einen Zugriffswettbewerb gewinnt, so daß sie ihre Daten übertragen kann. Das Bussystem 18 ist hier getaktet, und zu Beginn eines jeden Takts führen die Stationen den Zugriffswettbewerb durch. Dabei werden auf Leitungen des Bussystems 18 Wettbewerbsnummern der einzelnen Stationen geschaltet. Dies geschieht in Verfahrensschritt 3. Jede Station vergleicht ihre gesendete Wettbewerbsnummer mit einer auf dem Bussystem 18 befindlichen Codierung. Ist die Codierung größer als die gesendete Wettbewerbsnummer, dann zieht sich die jeweilige Station sofort aus dem Zugriffswettbewerb zurück. Damit wird am Ende des Zugriffswettbewerbs die Station mit der höchsten Wettbewerbsnummer diesen Wettbewerb gewinnen und kann ihre Daten versenden. Die Wettbewerbsnummern sind so beschaffen, daß eine Überlagerung von mehreren Wettbewerbsnummern nicht zu einer weiteren Wettbewerbsnummer führt. Weiterhin ist bei einer Überlagerung von Wettbewerbsnummern erkennbar, ob eine Wettbewerbsnummer einer Station größer oder kleiner als die größte der sich überlagernden Wettbewerbsnummern ist.

In Verfahrensschritt 4 überprüft jede sendende Station gesendete Nutzdaten auf Übertragungsfehler, indem die gesendeten Nutzdaten als Echo mit zwischengespeicherten Nutzdaten verglichen werden. Tritt bei diesem Vergleich ein Unterschied auf, dann wird ein Übertragungsfehler signalisiert. Für diesen Vergleich weist eine Station einen Vergleicher auf, der ein zusätzliches Modul der Station darstellt, wobei das Modul einen entsprechenden Logikschaltkreis aufweist.

Darüber hinaus überprüft jede Station, ob Steuerdaten, wie auch z.B. Wettbewerbsnummern, den zulässigen Bitmustern entsprechen. Ist dies nicht der Fall, wird ein Übertragungsfehler signalisiert. Weiterhin überprüft jede Station, ob die zeitliche Abfolge von Steuersignalen zulässig ist. Dies wird mit Plausibilitätsüberprüfung bezeichnet.

In Verfahrensschritt 5 wird überprüft, ob ein Übertragungsfehler stattgefunden hat oder nicht. Hat kein Übertragungsfehler stattgefunden, wird wieder zu Verfahrensschritt 1 zurückgesprungen, um weitere Daten zu übertragen. Hat jedoch ein Übertragungsfehler stattgefunden, wird in Verfahrensschritt 6 eine Station, die einen Übertragungsfehler detektiert, einen Übertragungstest durchführen, um festzustellen, ob der Grund für die Übertragungsfehler das Bussystem 18 selbst ist. Dafür nimmt die Station an dem nächsten Zugriffswettbewerb teil, indem sie eine Wettbewerbsnummer mit der höchsten Priorität auf die entsprechenden Leitungen des Bussystems 18 schaltet, um diesen Zugriffswettbewerb unbedingt zu gewinnen. Ein Übertragungstest weist die höchste Priorität auf, um sofort festzustellen, ob Übertragungen überhaupt noch sicher über das Bussystem 18 durchgeführt werden können.

In Verfahrensschritt 7 wird überprüft, ob der Zugriffswettbewerb für den Übertragungstest gewonnen wurde. Da eine Wettbewerbsnummer mit der höchsten Priorität gesendet wurde, kann dieser Zugriffswettbewerb nur in dem Falle nicht gewonnen werden, wenn auch andere Stationen einen Übertragungstest durchführen wollen.

Gelingt jedoch der Gewinn des Zugriffswettbewerbs, dann wird in Verfahrensschritt 9 von der Station ein Testmuster gesendet, um festzustellen, ob das Bussystem 18 Ursache für die Übertragungsfehler ist. Das Testmuster enthält Informationen, die es jeder Station erlauben, zu erkennen, ob sie als einzige Station den Test durchführt oder andere Stationen mitbeteiligt sind. Die Auswertung wird dann in Verfahrensschritt 10 vorgenommen.

Im letzten Fall, also andere Stationen sind auch beteiligt, werden die beteiligten Stationen mit individuell verschiedenen Zeitverzögerungen erneut die höchste Wettbewerbsnummer senden, während die anderen Stationen, die auch diese Wettbewerbsnummer gesendet hatten, wegen abweichender Zeitverzögerung erst später ihre Wettbewerbsnummer auf die entsprechenden Leitungen des Bussystems 18 schalten. Damit wird es ermöglicht, daß der Zugriffswettbewerb von einer der Stationen, die den Übertragungstest durchführen wollen, gewonnen wird. Dann wird auch hier in Verfahrensschritt 9 fortgefahren, um das Testmuster zu senden.

In Verfahrensschritt 10 wird das Testmuster von der sendenden Station wieder empfangen, um einen Vergleich durchzuführen, ob das Testmuster ohne Übertragungsfehler übertragen wurde. In Verfahrensschritt 11 wird festgestellt, ob das Testmuster ohne Übertragungsfehler empfangen wurde oder nicht. Ist es ohne Übertragungsfehler empfangen worden, dann wird entschieden, daß das Bussystem 18 weiterhin fehlerfrei arbeitet, so daß in Verfahrensschritt 13 in den folgenden Takten wieder Zugriffswettbewerbe durchgeführt werden, um Daten zu übertragen, so daß dann in Verfahrensschritt 1 fortgefahren wird.

Ist jedoch ein Übertragungsfehler aufgetreten, wird in Verfahrensschritt 12 den anderen Stationen ein Wechsel auf ein redundantes Bussystem signalisiert. Die Signalisierung ist Bestandteil des Busprotokolls und wird auf einer Leitung des Bussystems 18 übertragen, so daß dann alle Stationen den Wechsel signalisiert bekommen. Dann kann auf dem redundanten Bussystem in Verfahrensschritt 1 fortgefahren werden.

Liegt kein redundantes Bussystem vor, können keine weiteren Datenübertragungen über das Bussystem 18, das als fehlerhaft erkannt wurde, durchgeführt werden, und es wird signalisiert, daß aus der Sicht der testenden Station die Vermittlungseinrichtung fehlerhaft arbeitet. Diese Station zieht sich dann vom Busbetrieb zurück.

## Patentansprüche

1. Verfahren zur Ermittlung und Behandlung von Übertragungsfehlern auf einem Bussystem (18), wobei mehrere Stationen (14, 15, 16, 17) an das Bussystem (18) angeschlossen werden, wobei die Stationen (14, 15, 16, 17) Daten versenden, die Nutzdaten und Steuerdaten aufweisen, wobei während eines Zugriffswettbewerbs durch mindestens eine Station (14, 15, 16, 17) ihre Wettbewerbsnummer auf das Bussystem (18) geschaltet wird, wobei durch jede Station (14, 15, 16, 17) ermittelt wird, ob eine gesendete Wettbewerbsnummer eine kleinere Wertigkeit als eine auf dem Bussystem (18) befindliche Codierung aufweist, wobei in diesem Fall eine die zu der gesendeten Wettbewerbsnummer gehörige Station aus dem Zugriffswettbewerb genommen wird, **dadurch gekennzeichnet, daß** im Falle des Auftretens der Übertragungsfehler eine Wettbewerbsnummer mit der höchsten Priorität von der einen Übertragungsfehler feststellenden Station gesendet wird, um ein Testmuster zu senden, wobei das Testmuster Information enthält, die es jede Station erlauben, zu erkennen, ob sie als einzige Station den Test durchführt oder andere Stationen mitbeteiligt sind, wobei die Übertragungsfehler von jeder an das Bussystem (18) angeschlossenen Station (14, 15, 16, 17) selbst durch Vergleich von gesendeten Nutzdaten als Echo mit gespeicherten Nutzdaten und/oder durch Vergleich von zulässigen Bitmustern mit den Steuerdaten und/oder durch einer Überprüfung von zeitlichen Abfolge von aufeinanderfolgenden Steuerdaten detektiert werden, und daß, wenn dieses Testmuster auch zu Übertragungsfehlern führt, der Zugang zum Bussystem (18) abgeschaltet wird und gegebenenfalls auf ein weiteres Bussystem umgeschaltet wird.

2. Verfahren nach Anspruch 1, **dadurch gekennzeichnet, daß**, wenn mehrere an das Bussystem (18) angeschlossene Stationen (14, 15, 16, 17) das Testmuster senden, dies erkannt wird und daß dann ein weiterer Zugriffswettbewerb durchgeführt wird, wobei jeder Station, die das Testmuster zu senden wünscht, zu verschiedenen Zeitpunkten an folgenden Zugriffswettbewerben teilzunehmen erlaubt wird.

3. Verfahren nach Anspruch 2, **dadurch gekennzeichnet, daß**, wenn ein Wechsel zu einem weiteren Bussystem erforderlich wird, dies den Stationen (14, 15, 16, 17) mittels einer Signalisierung angezeigt wird.

4. Verfahren nach Anspruch 3, **dadurch gekennzeichnet, daß** die Signalisierung innerhalb eines Busprotokolls durchgeführt wird.

5. Verfahren nach Anspruch 4, **dadurch gekennzeichnet, daß** das Testmuster mit einer Codierung gesendet wird, wobei die Codierung es erlaubt, festzustellen, ob mehr als eine Station das Testmuster zu senden wünscht.

## Claims

1. Method for determining and handling transmission errors on a bus system (18), wherein a number of stations (14, 15, 16, 17) are connected to the bus system (18), wherein the stations (14, 15, 16, 17) send out data which have useful data and control data, wherein, during an access competition by at least one station (14, 15, 16, 17), its competitive number is connected to the bus system (18), wherein each station (14, 15, 16, 17) determines whether a transmitted competitive number has lower weighting than a coding located on the bus system (18), wherein, in this case, a station belonging to the transmitted competitive number is taken out of the competition, **characterized in that** in the case of the occurrence of the transmission errors, a competitive number having the highest priority is transmitted by the station detecting a transmission error in order to transmit a test pattern, wherein the test pattern contains information which allows each station to detect whether it is the only station carrying out the test or other stations are also involved, wherein the transmission errors are detected by each station (14, 15, 16, 17) itself, connected to the bus system (18), by comparing transmitted useful data as echo with stored useful data and/or by comparing permissible bit patterns with the control data and/or by checking a time sequence of successive control data and that, if this test pattern also leads to transmission errors, the access to the bus system (18) is disconnected and is possibly switched to another bus system.

2. Method according to Claim 1, **characterized in that**, if a number of stations (14, 15, 16, 17) connected to the bus system (18) transmit the test pattern, this is detected and that a further access competition is then carried out, wherein each station that wishes to send the test pattern is allowed to participate in subsequent access competitions at different times.

3. Method according to Claim 2, **characterized in that**, if a change to another bus system becomes necessary, this is indicated to the stations (14, 15, 16, 17) by means of signalling.

4. Method according to Claims 3, **characterized in that** the signalling is carried out within a bus protocol.

5. Method according to Claim 4, **characterized in that** the test pattern is transmitted with a coding, wherein the coding allows to be determined whether more than one station wishes to transmit the test pattern.

## Revendications

1. Procédé de détection et de traitement d'erreurs de transmission sur un système de bus (18), dans lequel
plusieurs stations (14, 15, 16, 17) sont raccordées au système de bus (18),
les stations (14, 15, 16, 17) envoient des données qui contiennent des données utiles et des données de commande,
pendant un concours d'accès par au moins une station (14, 15, 16, 17), le numéro de concours de cette station est délivré sur le système de bus (18),
on détermine par le biais de chaque station (14, 15, 16, 17) si un numéro de concours envoyé a une valeur inférieure à un code se trouvant sur le système de bus (18),
dans ce cas une station associée au numéro de concours envoyé est retirée du concours d'accès,
**caractérisé en ce que**, en cas de survenance d'erreurs de transmission, un numéro de concours ayant la priorité la plus élevée est envoyé par la station détectant une erreur de transmission afin d'envoyer une trame de test, la trame de test contenant des informations qui permettent à chaque station de détecter si ces informations réalisent le test en tant que station unique ou s'il y a d'autres stations participantes, les erreurs de transmission étant détectées par chaque station (14, 15, 16, 17) raccordée au système de bus (18) en comparant des trames binaires permises contenant les données de commande et/ou en vérifiant une suite temporelle de données de commande successives, et **en ce que**, lorsque cette trame de test entraîne également des erreurs de transmission, l'accès au système de bus (18) est déconnecté et est éventuellement reconnecté à un autre système de bus.

2. Procédé selon la revendication 1, **caractérisé en ce que**, lorsque plusieurs stations (14, 15, 16, 17) raccordées au système de bus (18) envoient la trame de test, ceci est détecté, et **en ce qu'**un autre concours d'accès est ensuite réalisé dans lequel chaque station qui souhaite envoyé la trame de test est autorisée à participer à des instants différents aux concours d'accès suivants.

3. Procédé selon la revendication 2, **caractérisé en ce que**, lorsqu'un passage vers un autre système de bus est nécessaire, ceci est indiqué aux stations (14, 15, 16, 17) au moyen d'une signalisation.

4. Procédé selon la revendication 3, **caractérisé en ce que** la signalisation est effectuée dans le cadre d'un protocole de bus.

5. Procédé selon la revendication 4, **caractérisé en ce que** la trame de test est envoyée avec un code, le code permettant de déterminer si plus d'une station souhaite envoyer la trame de test.
